# FASCICULE DE BREVET EUROPEEN

(11) **EP 1 070 722 B1**
(45) Date de publication et mention de la délivrance du brevet: **11.08.2004**
(21) Numéro de dépôt: 00401789.3
(22) Date de dépôt: 22.06.2000
(51) Int. Cl.: C07F 7/18, C08G 77/04, B01D 53/00, B01J 45/00

(54) **Nouveau gel de silice incorporant des motifs polyazacylcloalcanes comportant plus de six atomes d'azote, procédé de préparation et utilisation**
Silica mit Polyazacycloalkaneinheiten die mehr als sechs Stickstoffatome enthalten, Verfahren zu deren Herstellung und Verwendung
Silica with polyazacycloalkane units containing more than six nitrogen atoms, process for their preparation and use

(30) Priorité: 23.07.1999 FR 9909587
(43) Date de publication de la demande: 24.01.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Denat, Franck, 21000 Dijon (FR); Dubois, Géraud, 21000 Dijon (FR); Tripier, Raphael, 21000 Dijon (FR); Guilard, Roger, 21121 Fontaine les Dijon (FR); Roux-Fouillet, Bruno, 21000 Dijon (FR)
(74) Mandataire: Conan, Philippe Claude

(56) Documents cités:
- EP-A- 0 581 433
- WO-A-96/11056
- WO-A-99/37399
- WO-A-99/37656
- FR-A- 2 774 092
- US-A- 5 120 443
- GROS, C. ET AL.: "new silica-gel-bound polyazacycloalkanes and characterization of their copper(I) complexes using electron spin resonance spectroscopy" JOURNAL OF THE CHEMICAL SOCIETY, DALTON TRANSACTIONS, 1996, pages 1209-1214, XP002075424

## Description

L'invention a pour objet un nouveau matériau utilisable dans le domaine de la séparation et de la purification des gaz. Les techniques actuelles de séparation, que ce soit la distillation cryogénique ou l'adsorption sur zéolithes et les techniques de purification par distillation cryogénique ou catalytique des gaz industriels, ne sont pas toujours optimisées, ni en terme économique ni en terme de pureté. De nombreux travaux ont par ailleurs montré que des gaz, tels que l'oxygène, l'hydrogène ou le monoxyde de carbone, réagissent sélectivement et de façon réversible avec des complexes de métaux de transition. Ainsi, les complexes de cobalt (II) du cyclame ou du cyclène fixent aisément l'oxygène de l'air (Machida R., Kimura E., Kodama M., Inorg. Chem. 1983, 22, 2055-2061) et conduisent à des espèces µ-peroxydiques en milieux aqueux. Cependant, la durée de vie des complexes oxygénés en solution est limitée car ces derniers peuvent subir des réactions de dégradation irréversibles Martell A. E., Basak A. K., Raleigh C. J., Pure Appl. Chem. 1988, 60, 1325-1329). Par ailleurs, la désoxygénation de ces espèces ne peut être réalisée par simple diminution de la pression partielle en dioxygène. Une amélioration de la réversibilité, nécessaire dans un procédé de séparation, nécessite une stabilisation de l'espèce intermédiaire superoxydique. Le greffage du ligand sur une matrice solide doit, à la fois ralentir l'évolution de l'espèce superoxydique en espèce µ-peroxydique, limiter les réactions d'hydrolyse et faciliter la manipulation du complexe actif (Tsuchida E., Nishide, H. Top. Curr. Chem. 1986, 32, 63-99). L'incorporation de complexes de cobalt avec des porphyrines, des phtalocyanines ou des cyclidènes dans des polymères organiques ou inorganiques, comme les gels de silice, et l'étude de l'interaction de ces matériaux avec l'oxygène, a déjà fait l'objet de plusieurs travaux. Le plus souvent, le complexe est synthétisé dans une première étape puis immobilisé sur le polymère par une liaison dative entre un atome d'azote d'un motif pyridine ou imidazole et le métal (Nishide H., Suzuki T., Kawakami H., Tsuchida E., J. Phys. Chem. 1994, 98, 5084-5088; Cameron J. H., Graham S., J. Chem. Soc. Dalton Trans. 1992, 385-391; Bowman R. G., Basolo F., Burwell Jr. R. L., J. Am. Chem. Soc. 1975, 97, 5125-5129). Une autre approche consiste à fixer dans un premier temps, le ligand sur le polymère par une liaison covalente et à métaller ensuite (Wöhrle Gitzel J., Krawczyk G., Tsuchida E., Ohno H., Okura I., Nishisaka T., J. Macromol. Sci. Chem. 1988, A25, 1227-1254.; Barnes M. J., Drago R. S., Balkus Jr. K. J., J. Am. Chem. Soc. 1988, 110, 6780-6785). Ainsi, le greffage sur gel de silice de ligands tétraazamacrocycliques et l'étude de la métallation de ces matériaux ont été réalisés (Gros C., Rabiet F., Denat F., Brandes S., Chollet H., Guilard R., J. Chem. Soc. Dalton Trans. 1996, 1209-1214). Le processus sol-gel a été étudié en détail (Hench L. L., West J. K., Chem. Rev. 1990, 90, 33-72) et présente une importance majeure dans la chimie des matériaux. Un des principaux intérêts de ce procédé réside dans la grande homogénéité des matériaux obtenus, leur conférant ainsi des propriétés spécifiques. Les précurseurs de type alcoxyde sont parmi les plus utilisés. Ainsi, l'hydrolyse du tétraéthoxysilane en solution dans un solvant organique, un alcool par exemple, conduit à une dispersion colloïdale de particules, issues de la polymérisation du précurseur, appelée sol. Ce sol évolue vers la formation d'un gel. Le séchage de ce gel par évaporation conduit à un xérogel, qui peut lui-même, être transformé en verre ou en céramique. Plus récemment, cette technique a permis l'élaboration de nouveaux matériaux hybrides organiques-inorganiques Corriu R. J. P., Leclercq, D., Angew. Chem. Int. Ed. 1996, 35, 1420-1436; Schubert U., Hüsing N., Lorenz A., Chem. Mater. 1995, 7, 2010-2027). Le précurseur est alors un composé organique porteur d'une ou de plusieurs terminaisons de type trialcoxysilyle [Si(OR₃)] ou silyle [SiH₃]. Diverses espèces organiques ont été utilisées telles des composés aromatiques, des motifs acétyléniques ou des amines linéaires et cycliques (Corriu R. J. P., Leclercq D., Angew. Chem. Int. Ed. 1996, 35, 1420-1436; Khatib I. S., Parish R. V., J. Organomet. Chem. 1989, 369, 9-16; Tsuda T., Fujiwara T., J. Chem. Soc., Chem. Commun. 1992, 1659-1661). Battioni et coll. ont incorporé par cette voie des porphyrines de manganèse et de fer dans un gel de silice et testé les propriétés catalytiques de ces nouveaux matériaux (Battioni P., Cardin E., Louloudi M., Schöllhorn B., Spyroulias G. A., Mansuy D., Traylor T. G., Chem. Commun. 1996, 2037-2038) .

La demande internationale publiée sous le numéro WO 96/11056 divulgue des polyazacycloalcanes à 3, 4 ou 5 atomes d'azote, des complexes tri-, tétra- ou pentaazamacrocycliques de métaux de transition et les procédés de fabrication de ces polyazacycloalcanes.

L'ancrage d'un complexe sur un polymère par une liaison dative entre une base et le métal, présente l'avantage d'activer le complexe et de stabiliser l'espèce superoxydique par l'encombrement de l'une des faces du complexe. Cependant, la liaison ainsi formée est faible. Le greffage du ligand par une liaison covalente conduit quant à lui à un matériau plus résistant. De façon générale, les méthodes d'incorporation des complexes de métaux de transition dans des matrices organiques ou inorganiques, n'ont jusqu'ici pu conduire à des matériaux compatibles avec les exigences du génie des procédés et donc utilisables dans des procédés industriels. En particulier, les caractéristiques d'un tel matériau doivent pouvoir être ajustées en termes de surface spécifique, de porosité, que ce soit le rayon, la forme ou la distribution de la taille des pores, et de granulométrie. La demanderesse a trouvé que le matériau, objet de la présente invention, permet de résoudre les problèmes exposés ci-dessus. L'invention a pour objet un composé de formule (I): 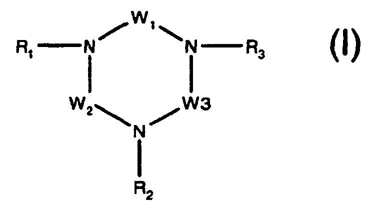 dans laquelle W₁, W₂ et W₃, identiques ou différents, représentent indépendamment les uns des autres, chacun un radical divalent choisi parmi ceux représentés par la formule générale (A):

-[(CT₅T₆)ₐ-(CT₁T₂)ₙ-[N(R₄)]ₚ-(CT₃T₄)ₘ-(CT₇T₈)_{b}]ₗ- (A)

dans laquelle p représente un nombre entier égal à 0 ou à 1, l représente un nombre entier supérieur ou égal à 1, et inférieur ou égal à 10 et plus particulièrement inférieur ou égal à 5, n et m, identiques ou différents, représentent chacun, indépendamment l'un de l'autre, un nombre entier inférieur ou égal à 3 et supérieur ou égal à 1, a et b, identiques ou différents, représentent chacun, indépendamment l'un de l'autre, un nombre entier inférieur ou égal à 2 et supérieur ou égal à 0, T₁, T₂, T₃, T₄, T₅, T₆, T₇ et T₈, identiques ou différents, représentent ou bien chacun, indépendamment les uns des autres, un atome d'hydrogène ou un radical alkyle, linéaire ou ramifié, comportant de 1 à 15 atomes de carbone ou bien CT₁T₂ et/ou CT₃T₄ et/ou CT₅T₆ et/ou CT₇T₈, représente un groupe divalent-(C=O)- et R₁, R₂, R₃ et R₄, identiques ou différents, représentent, indépendamment les uns des autres, soit un atome d'hydrogène, soit un radical de formule (B₁) choisi parmi les radicaux 3-(triéthoxysilyl) propyle, 3-[[3-(triéthoxysilyl) propyl] oxy] 2-hydroxy propyle, [4-[[[3-(triéthoxysilyl) propyl] amino] méthyl] phényl] méthyle, 4-[(triéthoxysilyl) phényl] propyle, 3-oxo 3-[[3-(triéthoxysilyl) propyl] oxy] propyle, 2-oxo 2-[[3-(triéthoxysilyl) propyl] amino] éthyle, [[3-(triéthoxysilyl) propyl] amino] carbonyle ou 4-[(triéthoxysilyl) phényl] méthyle, étant entendu que le composé de formule (I) comporte plus de six atomes d'azote cycliques et qu'au moins un des radicaux R₁ R₂ R₃ ou R₄ représente un radical B₁.

Comme composés de formule (I) comportant plus de six atomes d'azote cycliques, on peut citer par exemple, les composés dérivés du 1,4,8,11,15,18,22, 25-octaazacyclooctacosane, comportant huit atomes d'azote cycliques ou les composés dérivés du 1,4,7,10,13,16,19,22,25,28,31,34,37,40,43,46-hexadécaazacyclooctatétracontane ou du 1,4,8,11,15,18,22,25,29,32,36,39,43,46,50,53-hexadécaazacyclohexapentacontane, comportant 16 atomes d'azote cycliques.

L'invention a notamment pour objet, un composé de formule (I) telle que définie précédemment, dans laquelle, lorsque T₁, T₂, T₃, T₄, T₅, T₆, T₇ et T₈, représentent un atome d'hydrogène ou un radical alkyle T₁ est identique à T₂, T₃ est identique à T₄, T₅ est identique à T₆ et T₇ est identique à T₈ et plus particulièrement un composé de formule (I) telle que définie précédemment, dans laquelle lorsque T₁, T₂, T₃, T₄, T₅, T₆, T₇ et T₈, représentent un radical alkyle, il s'agit du radical méthyle.

L'invention a plus particulièrement pour objet un composé de formule (I) telle que définie précédemment, dérivé du 6,6,13,13,20,20,27,27-octaméthyl 1,4,8,11,15,18,22,25-octaazacyclooctacosane, du 6,6,13,13,20,20,27,27-octaméthyl 1,4,8,11,15,18,22,25-octaazacyclooctacosane-2,3,16,17-tétraone, du 1,4,7,10,13,16,19,22,25,28,31,34,37,40,43,46-hexadécaazacyclooctatétraconta ne-2,3,14,15,26,27,38,39-octaone ou du 1,4,8,11,15,18,22,25,29,32,36,39,43,46,50,53-hexadécaazacyclohexapentacontane-2,3,16,17,30,31,44,45-octaone.

L'invention a tout particulièrement pour objet les composés dont les noms suivent :
le 6,6,13,13,20,20,27,27-octaméthyl 1,4,8,11,15,18,22,25-octakis[[[3-(triéthoxysilyl)propyl]amino]carbonyl] 1,4,8,11,15,18,22,25-octaazacyclooctacosane,
le 6,6,13,13,20,20,27,27-octaméthyl 8,11,22,25-tétrakis[[[3-(triéthoxysilyl)propyl]amino]carbonyl] 1,4,8,11,15,18,22,25-octaazacyclooctacosane-2,3,16,17-tétraone,
le 7,10,19,22,31,34,43,46-octakis[[[3-(triéthoxysilyl)propyl]amino]carbonyl] 1,4, 7,10,13,16,19,22,25,28,31,34,37,40,43,46-hexadécaazacycloactatétracontane-2,3,14,15,26,27,38,39-octaone,
le 8,11,22,25,36,39,50,53-octakis[[[3-(triéthoxysilyl)propyl]amino]carbonyl] 1,4, 8,11,15,18,22,25,29,32,36,39,43,46,50,53-hexadécaazacyclohexapentacontane -2,3,16,17,30,31,44,45-octaone ou
le 6,6,13,13,20,20,27,27-octaméthyl 8,11,22,25-tétrakis[4-[(triéthoxysilyl)phényl] méthyl] 1,4,8,11,15,18,22,25-octaazacyclooctacosane-2,3,16,17-tétraone,

Selon un autre aspect de la présente invention, celle-ci a pour objet un procédé de préparation du composé de formule (I) telle que définie précédemment, caractérisé en ce que :
a) l'on fait réagir un composé choisi parmi le (triéthoxy) (3-iodopropyl) silane, le 2-[[[3-(triéthoxysilyl) propyl] oxy] méthyl]oxiranne, le N-[[4-(bromométhyl) phényl] méthyl] N-[3-(triéthoxysilyl) propyl] amine, le (triéthoxy) [(4-iodométhyl) phényl] silane, le propènoate de 3-(triéthoxysilyl) propyle, le N-[3-(triéthoxysilyl) propyl] bromoacétamide ou le (triéthoxy) (3-isocyanatopropyl) silane
   avec un composé de formule (I'): 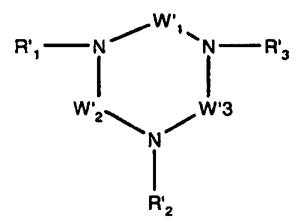 dans laquelle W'₁, W'₂ et W'₃, identiques ou différents, représentent indépendamment les uns des autres, chacun un radical divalent choisi parmi ceux représentés par la formule générale (A'):

   -[(CT₅T₆)ₐ-(CT₁T₂)ₙ-[N(R'₄)]ₚ-(CT₃T₄)ₘ-(CT₇T₈)_{b}]ₗ- (A')

   dans laquelle, a, b, l, p, n, m, T₁, T₂, T₃ T₄ T₅, T₆, T₇ et T₈ ont la même définition que pour la formule (A) telle que définie précédemment et R'₁ et R'₂, et R'₃ et R'₄ représentent chacun un atome d'hydrogène pour former le composé de formule (I).

Selon un autre aspect de la présente invention, celle-ci a pour objet un gel de polysiloxane (III) incorporant des polyazamacrocycles et des complexes métalliques de ces ligands azotés, caractérisé en ce qu'il est susceptible d'être obtenu à partir de l'hydrolyse d'un composé de formule (I) telle que définie précédemment conduisant à la formation d'un gel de polysiloxane incorporant des motifs de polyazamacrocycles non métallés (III'), suivie de l'action d'un sel métallique sur ledit gel (III'), ainsi que le procédé de préparation du gel de polysiloxane (III) ainsi mis en oeuvre, à partir du composé de formule (I) telle que définie précédemment. L'invention a plus particulièrement pour objet, le gel de polysiloxane (III₁) dans lequel l'élément métallique est choisi parmi le cobalt ou le cuivre.

Selon un autre aspect de la présente invention, celle-ci a pour objet un gel de polysiloxane (IV) incorporant des polyazamacrocycles et des complexes métalliques de ces ligands azotés, caractérisé en ce qu'il est susceptible d'être obtenu à partir de l'action d'un sel métallique sur un composé de formule (I) telle que définie précédemment, conduisant à la formation d'un complexe organométallique dudit métal avec ledit composé de formule (I), suivie de l'hydrolyse dudit complexe organométallique, ainsi que le procédé de préparation du gel de polysiloxane (IV) ainsi mis en oeuvre, à partir du composé de formule (I) telle que définie précédemment. L'invention a plus particulièrement pour objet, le gel de polysiloxane (IV₁) dans lequel l'élément métallique est choisi parmi le cobalt ou le cuivre.

Le cation métallique intervenant dans la composition du gel de polysiloxane (III) ou (IV) est notamment choisi parmi les cations de U, Pu, Am, Eu, Ce, Cr, Gd, Mn, Fe, Co, Ni, Cu, Zn, Ag, Cd, Au, Hg ou Pb, et est de préférence un cation Cu⁺⁺ ou Co⁺⁺.

Dans un dernier aspect de la présente invention, celle-ci a pour objet l'utilisation de ces gels hybrides métallés tels que définis précédemment, pour séparer un gaz déterminé d'un mélange de gaz ; cette utilisation se caractérise par la mise en contact dudit mélange de gaz avec un des gels hybrides métallés (III) ou (IV), tels que définis précédemment, dans des conditions permettant l'absorption dudit gaz à séparer, suivie d'une phase de désorption dudit gaz fixé sur ledit gel et d'une phase de récupération dudit gaz désorbé. Cette utilisation est de préférence appliquée à la séparation de l'oxygène de l'air, soit dans le but de produire de l'oxygène pur, soit dans le but d'éliminer l'oxygène de l'air.

Les gels non métallés (III') peuvent aussi être mis en oeuvre pour purifier les gaz par adsorption des impuretés gazeuses indésirables.

Les exemples suivants illustrent l'invention et notamment les deux voies de synthèse précédemment décrites, selon un procédé sol-gel, de nouveaux polysiloxanes incorporant des polyazacycloalcanes et des complexes métalliques de ces ligands azotés.

Comme le montrent ces exemples, la diversité des précurseurs utilisés, l'addition éventuelle de tétraalkoxysilane lors de l'étape de gélification, les variations dans les conditions opératoires, permettent d'obtenir des matériaux de composition et de texture variable, tant en termes de concentration de ligand ou de complexe dans le solide, que de porosité et surface spécifique. Dans des conditions de synthèse rigoureusement identiques, les solides obtenus présentent des caractéristiques identiques, montrant ainsi une bonne reproductibilité de la méthode.

Les avantages de cette méthode résident donc essentiellement dans la possibilité d'ajuster les caractéristiques du matériau en fonction des exigences du génie des matériaux.

### PARTIE EXPERIMENTALE

### A)-Synthèse des précurseurs

La synthèse des précurseurs est réalisée sous atmosphère d'azote, les macrocycles azotés de départ comportant 8 ou 16 atomes d'azote sont obtenus selon la méthode décrite dans Tripier R, Siri O, Rabiet F, Denat F, Guilard R, Tetrahedron Lett., 40, 1999, 79-82.

### Exemple 1 : 6,6,13,13, 20,20,27,27-octaméthyl 1,4,8,11,15,18,22,25-octakis [[[3-(triéthoxysilyl) propyl] amino] carbonyl] 1,4,8,11,15,18,22,25-octaazacyclooctacosane.

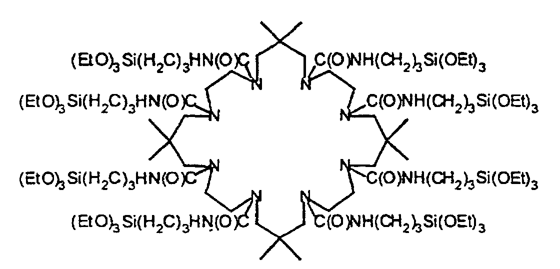

Dans un tube de Schlenk de 200cm³, on dissout 0,69g (1,35mmoles) de 6,6,13,13,20,20,27,27-octaméthyl-1,4,8,11,15,18,22,25-octaazacyclooctacosane dans 20cm³ de tétrahydrofuranne (THF) anhydre. On ajoute rapidement 3,2g (12,9mmoles) de (3-isocyanatopropyl)triéthoxysilane. Le mélange réactionnel est agité à température ambiante pendant 12 heures. Après évaporation du solvant, le solide obtenu est lavé deux fois avec 50cm³ de pentane anhydre. On obtient 1,97g du composé attendu, sous forme d'une poudre blanche.
Rdt = 60%.
RMN ¹H (200 MHz, CDCl₃) (δ en ppm)
0,61 (m, 16H) ; 0,93 (m, 24H) ; 1,19 (t, 72H) ; 1,6-1,8 (m, 32H) ; 3,1-3,2 (m, 32H) ; 3,79 (q, 48H).

### Exemple 2 : 6,6,13,13,20,20,27,27-octaméthyl 8,11,22,25-tétrakis[[[3-(triéthoxysilyl)propyl]amino]carbonyl]1,4,8,11,15,18,22,25-octaazacyclooctacosane-2,3,16,17-tétraone.

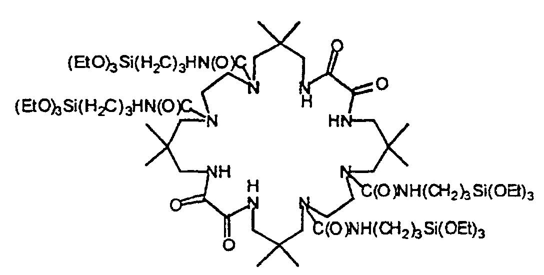

Dans un tube de Schlenk de 200cm³, on introduit 0,5g (0,88mmole) de 6,6,13,13,20,20,27,27-octaméthyl-1,4,8,11,15,18,22,25-octaazacyclooctacosane-2,3,16,17-tetraone et 50 cm³ de THF anhydre. On ajoute rapidement 0,92g (3,7mmoles) de 3-isocyanatopropyltriéthoxysilane. Le mélange réactionnel est agité à température ambiante pendant 7h. Le solide obtenu après évaporation du solvant est traité comme à l'exemple 1. On obtient ainsi 1,11g du composé attendu, sous forme d'une poudre blanche. Rdt = 81%.
RMN ¹H (500 MHz, DMSO d⁶) (δ en ppm)
0,50 (m, 8H) ; 0,72 (m, 24H) ; 1,08 (t, 36H) ; 1,44 (m, 8H) ; 2,8-3,3 (m, 32H) ; 3,67 (q, 24H).
RMN ¹³C (125 MHz, DMSO d⁶) (δ en ppm)
8,3 ; 19,0 ; 24,4 ; 38,7 ; 44,1 ; 46,5 ; 58,5 ; 159,2 ; 160,8.

| Analyse élémentaire pour C₆₈H₁₄₀N₁₂O₂₀Si₄: | | | |
|---|---|---|---|
| | C | H | N |
| Calculés | 52,4% | 9,1% | 10,8% |
| Trouvés | 51,7% | 8,9% | 10,8% |

### Exemple 3 : 7,10,19,22,31,34,43,46-octakis[[[3-(triéthoxysilyl)propyl]amino]carbonyl]1,4,7,10,13,16,19,22,25,28,31,34,37,40,43,46-hexadécaazacyclooctatétra-contane-2,3,14,15,26,27,38,39-octaone

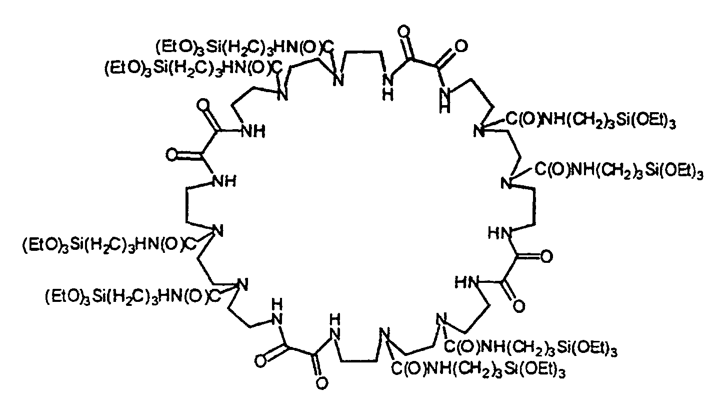

Dans un tube de Schlenk de 200cm³, on introduit 0,37g (0,46mmole) de 1,4,7,10,13,16,19,22,25,28,31,34,37,40,43,46-hexadecaazacyclooctatétracontane-2,3,14,15,26,27,38,39-octaone et 50 cm³ de THF anhydre. On ajoute rapidement 0,963g (3,9mmoles) de 3-isocyanatopropyltriéthoxysilane. Le mélange réactionnel est porté à reflux pendant 12h. Le solide obtenu après évaporation du solvant, est traité comme à l'exemple 1. On obtient 0,80g du composé attendu, sous forme d'une poudre blanche. Rdt = 62%.
RMN ¹H (200 MHz, CDCl₃) (δ en ppm)
0,62 (m, 16H) ; 1,19 (t, 72H) ; 1,61 (m, 16H) ; 3,1-3,5 (m, 64H) ; 3,79 (q, 48H) .

| Analyse élémentaire pour C₁₁₂H₂₃₂N₂₄O₄₀Si₈: | | | |
|---|---|---|---|
| | C | H | N |
| Calculés | 48,4% | 8,4% | 12,1% |
| Trouvés | 45,0% | 7,8% | 13,9% |

### Exemple 4 : 8,11,22,25,36,39,50,53-octakis[[[3-(triéthoxysilyl)propyl]amino]carbonyl]1,4,8,11,15,18,22,25,29,32,36,39,43,46,50,53-hexadécaazacyclohexapentacontane-2,3,16,17,30,31,44,45-octaone

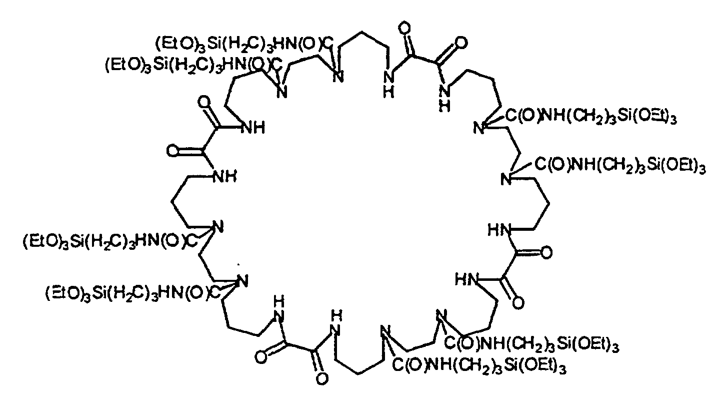

Dans un tube de Schlenk de 200cm³, on introduit 0,5g (0,55mmole) de 1,4, 8,11,15,18,22,25,29,32,36,39,43,46,50,53-hexadecaazacyclohexapentacontane-2,3,16,17,30,31,45,46-octaone et 100cm³ de THF anhydre. On ajoute rapidement 1,14g (4,6mmoles) de 3-isocyanatopropyltriéthoxysilane et le mélange réactionnel est porté à reflux pendant 12h. Le solide obtenu après évaporation du solvant est traité comme à l'exemple 1. On obtient 1,10 g du composé attendu, sous forme d'une poudre blanche. Rdt = 70%.
RMN ¹H (200 MHz, CDCl₃) (δ en ppm)
0,62 (m, 16H) ; 1,14 (t, 72H) ; 1,5-1,8 (m, 32H) ; 3,0-3,3 (m,64H) ; 3,75 (q, 48H).

| Analyse élémentaire pour C₁₂₀H₂₄₈N₂₄O₄₀Si₈: | | | |
|---|---|---|---|
| | C | H | N |
| Calculés | 49,8% | 8,7% | 11,6% |
| Trouvés | 46,6% | 8,3% | 13,1% |

### Exemple 5 : le 6,6,13,13,20,20,27,27-octaméthyl 8,11,22,25-tétrakis[4-[(triéthoxysilyl)phényl] méthyl] 1,4,8,11,15,18,22,25-octaazacyclooctacosane-2,3,16,17-tétraone

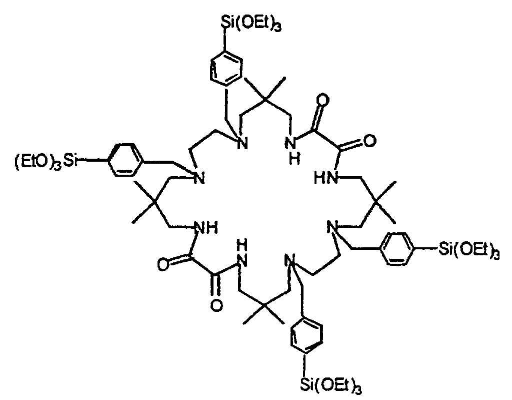

Dans un tube de Schlenk de 200cm³, on introduit 1g (1,76mmoles) de 6,6,13,13,20,20,27,27-octaméthyl 1,4,8,11,15,18,22,25-octaazacyclooctacosane-2,3,16,17-tetraone, 2,07g (0,015mole) de K₂CO₃, et 30cm³ de THF anhydre. On ajoute goutte à goutte, 2,67g (7mmoles) de triéthoxy [(4-iodophényl)méthyl] silane. Le mélange réactionnel est agité à température ambiante pendant 12h puis porté au reflux pendant 3h. Après retour à température ambiante, le solide résiduel (K₂CO₃) est filtré, lavé avec 2 fois 20 cm³ de THF anhydre. Le solvant est évaporé et on obtient 2,6g du composé attendu, sous forme d'une poudre légèrement jaune. Rdt = 94 %.
RMN ¹H (500 MHz, CDCl₃) (δ en ppm)
0,8-0,9 (m, 24H) ; 1,22 (t, 36H) ; 2,2-3,7 (m, 32H) ; 3,83 (q, 24H) ; 7,2-7,6 (m, 16H).
RMN ¹³C (125 MHz, CDCl₃) (δ en ppm)
18,6 ; 23,9 ; 37,5 ; 49,5 ; 59,1 ; 62,5 : 129,1 ; 135,3 ; 160,4.

### B)-Synthèse des gels

Dans un pilulier, on place dans l'ordre suivant, un des précurseurs préparés aux exemples 1 à 5, le solvant, la quantité d'eau nécessaire (soit 1,5 équivalents par rapport au nombre d'atomes de silicium) et le catalyseur. Le temps de gélification tg est mesuré à partir de l'instant ou tous les réactifs ont été introduits.
Les gels obtenus sont ensuite soumis à un vieillissement pendant 5 jours à température ambiante, puis ils sont broyés, puis lavés à l'éthanol puis à l'éther diéthylique, et enfin séchés à 100 °C sous pression de 20 mm Hg pendant 12h.

### C)-Synthèse des co-gels :

Les co-gels sont synthétisés et traités comme décrit précédemment mais en ajoutant 10 équivalents de tétraéthoxysilane (TEOS) dès le départ au précurseur. La quantité d'eau nécessaire à l'hydrolyse est calculée en ajoutant 1,5 équivalents par rapport au nombre d'atomes de silicium présents dans le précurseur à 2 équivalents par rapport au TEOS.

### Exemple 6 : Préparation d'un gel du composé préparé à l'exemple 1 (gel 6)

Le gel est obtenu à partir de 0,5g (0,2 mmole) du précurseur préparé à l'exemple 1, de 1,4cm³ de THF, de 0,07cm³ d'eau et de 0,2cm³ d'une solution 0,1 Molaire de TBAF (fluorure de tétrabutylammonium) dans le THF.
Le temps de gélification Tg est de 4 jours à 19°C. Après le traitement, 0,31g de gel sont obtenus sous forme d'une poudre blanche.
RMN ²⁹Si CP MAS (δ en ppm)
-45 ; -49 ; -58 ; -67.
RMN ¹³C CP MAS (δ en ppm)
9,6 ; 18,9 ; 24,6 ; 40-56 ; 58,5 ; 89,9 ;159,8.

| Analyse élémentaire pour C₆₀H₁₀₄N₁₆O₂₀Si₈ | | | |
|---|---|---|---|
| | C | H | N |
| Calculés | 45,2% | 6,6% | 14,1% |
| Trouvés | 42,9% | 7,9% | 11,9% |
| Analyse BET : Surface spécifique <10m²/g. | | | |

### Exemple 7 : Préparation d'un co-gel du composé préparé à l'exemple 1 (co-gel 7)

Le co-gel est obtenu à partir de 0,5g (0,2mmole) du précurseur préparé à l'exemple 1, de 0,21g (1mmole) de TEOS, de 1,2cm³ de THF, de 0,079cm³ d'eau et de 0,2cm³ d'une solution 0,1 Molaire de TBAF dans le THF. Le temps de gélification Tg est de 4 jours à 19°C. Après traitement, 0,38g de co-gel sont obtenus sous forme d'une poudre blanche.
RMN ²⁹Si CP MAS (δ en ppm)
-46 ; -58 ; -64 ; -100 ; -110.
RMN ¹³C CP MAS (δ en ppm)
10,0 ; 19,2 ; 24,3 ; 40-56 ; 58,5 ; 92,4 ;160,2.
Analyse BET : Surface spécifique <10m²/g.

### Exemple 8 : Préparation d'un gel du composé préparé à l'exemple 2 (gel 8)

Le gel est obtenu à partir de 0,7 g (0,45mmole) du précurseur préparé à l'exemple 2, 6,3cm³ de THF, 0,05cm³ d'eau et 0,45cm³ d'une solution 0,1 Molaire de TBAF dans le THF. Tg = 1 jour à 19°C. Après traitement, 0,44g de gel sont obtenus sous forme d'une poudre blanche.
RMN ²⁹Si CP MAS (δ en ppm)
-45 ; -59 ; -65.
RMN ¹³C CP MAS (δ en ppm)
11,1; 18,9 ; 24,8 ; 38,4 ; 46,6 ; 58,6 ; 94,9 ; 160,6.

| Analyse élémentaire pour C₄₄H₈₀N₁₂O₁₄Si₄ | | | |
|---|---|---|---|
| | C | H | N |
| Calculés | 47,5% | 7,3% | 15,1% |
| Trouvés | 47,7% | 8,1% | 14,3% |
| Analyse BET : Surface spécifique <10m²/g. | | | |

### Exemple 9 : Préparation d'un gel du composé préparé à l'exemple 3 (gel 9)

Le gel est obtenu à partir de 0,6g (0,263mmole) du précurseur préparé à l'exemple 3, 6,2cm³ de THF, 0,07 ml d'eau et 0,2cm³ d'une solution 0,1 Molaire de TBAF dans le THF. Tg = 15 jours à 19°C. Après traitement, 0,35g de gel sont obtenus sous forme d'une poudre blanche.
RMN ²⁹Si CP MAS (δ en ppm)
-44 ; -52 ; -58 ; -67
RMN ¹³C CP MAS (δ en ppm)
11,2 ; 18,9 ; 24,4 ; 40-46 ; 58,8 ; 94,5 ; 160,7.

| Analyse élémentaire pour C₆₄H₁₁₂ N₂₄ O₂₈Si₈ | | | |
|---|---|---|---|
| | C | H | N |
| Calculés | 40,7% | 6,0% | 17,8% |
| Trouvés | 39,6% | 6,9% | 14,9% |
| Analyse BET : Surface spécifique <10m ² /g. | | | |

### Exemple 10 : Préparation d'un gel du composé préparé à l'exemple 4 (gel 10)

Le gel est obtenu à partir de 0,5g (0,173mmole) du précurseur préparé à l'exemple 4, 6,9cm³ de méthanol, 0,037cm³ d'eau et 0,173cm³ d'une solution 0,1 Molaire de TBAF dans le THF. Tg < 1 jour à 20°C. Après traitement, 0,31g de gel sont obtenus sous forme d'une poudre blanche.
RMN ²⁹Si CP MAS (δ en ppm)
-59 ; -65.
RMN ¹³C CP MAS (δ en ppm)
11,5 ; 24,9 ; 40-46 ; 95 ; 160,4.

| Analyse élémentaire pour C₇₂H₁₂₈N₂₄O₂₈Si₈ | | | |
|---|---|---|---|
| | C | H | N |
| Calculés | 43,2% | 6,5% | 16,8% |
| Trouvés | 40,8% | 6,5% | 15,5% |
| Analyse BET : Surface spécifique <10m²/g. | | | |

### Exemple 11 : Préparation d'un gel du composé préparé à l'exemple 5 (gel 11)

Le gel est obtenu à partir de 1,5g (0,951 mmole) du précurseur préparé à l'exemple 5, 10cm³ de THF, 0,103cm³ d'eau et 0,095cm³ d'une solution 0,1 Molaire de TBAF dans le THF. Tg < 1 jour à 19°C. Après traitement, 1,16g de gel sont obtenus sous forme d'une poudre blanche.
Analyse BET : Surface spécifique <10 m²/g.

### D)-Métallation des gels et co-gels

Dans un tube de Schlenk, sous atmosphère d'argon, on mélange le gel ou le co-gel avec 4 équivalents de sel métallique (CuCl₂) préalablement déshydraté dans 10 ml de méthanol distillé et séché sur tamis moléculaire. Le mélange réactionnel est porté au reflux pendant 12 h puis filtré et lavé avec 20cm³ de méthanol (10 puis 2 x 5cm³). Le nombre de milliéquivalents de cuivre séquestré, mesuré par fluorescence X, permet de déterminer un rendement de métallation.

### Exemple 12 : Métallation du gel 6

A partir de 100mg de gel 6 et de 33,6mg de CuCl₂, on obtient 105mg d'une poudre vert clair. Rdt de métallation = 18%.
Analyse BET : Surface spécifique <10 m²/g.
Volume de dioxygène (V_{O2}) chimisorbé après traitement 4h à 250°C : 1,18Ncc/g (50% d'oxygénation).

### Exemple 13 : Métallation du co-gel 7

A partir de 100mg de co-gel 7 et de 28mg de CuCl₂, on obtient105 mg d'une poudre vert clair. Rdt de métallation = 23%.
Analyse BET : Surface spécifique <10 m²/g.

### Exemple 14 : Métallation du gel 11 :

A partir de 320mg de gel 11 et 161mg de CuCl₂, on obtient 390mg d'une poudre marron-vert. Rdt de métallation = 97% (1,378mmol/g).
Analyse BET : Surface spécifique <10m²/g.
Volume d'azote (V_{N2}) physisorbé après traitement 12h à 250°C : 0.
V_{O2} chimisorbé après traitement 2h30 à 150°C : 1,24 Ncc/g (8% d'oxygénation).
V_{O2} chimisorbé après traitement 5h à 250°C : 2,73 Ncc/g (18% d'oxygénation).
V_{O2} chimisorbé après traitement 10h à 250°C : 3,46 Ncc/g (22% d'oxygénation).
V_{O2} chimisorbé après traitement 7h à 250°C : 3,67 Ncc/g (24% d'oxygénation).

## Revendications

1. Composé de formule (I): 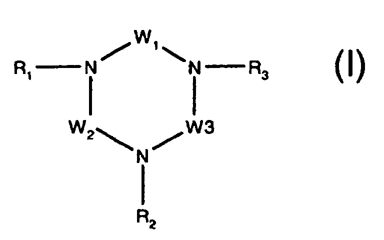 dans laquelle W₁, W₂ et W₃, identiques ou différents, représentent indépendamment les uns des autres, chacun un radical divalent choisi parmi ceux représentés par la formule générale (A):
-[(CT₅T₆)ₐ-(CT₁T₂)ₙ-[N(R₄)]ₚ-(CT₃T₄)ₘ-(CT₇T₈)_{b}]ₗ- (A)
dans laquelle p représente un nombre entier égal à 0 ou à 1, l représente un nombre entier supérieur ou égal à 1 et inférieur ou égal à 10 et plus particulièrement inférieur ou égal à 5, n et m, identiques ou différents, représentent chacun, indépendamment l'un de l'autre, un nombre entier inférieur ou égal à 3 et supérieur ou égal à 1, a et b, identiques ou différents, représentent chacun, indépendamment l'un de l'autre, un nombre entier inférieur ou égal à 2 et supérieur ou égal à 0, T₁, T₂, T₃, T₄, T₅, T₆, T₇ et T₈, identiques ou différents, représentent ou bien chacun, indépendamment les uns des autres, un atome d'hydrogène ou un radical alkyle, linéaire ou ramifié, comportant de 1 à 15 atomes de carbone ou bien CT₁T₂ et/ou CT₃T₄ et/ou CT₅T₆ et/ou CT₇T₈, représente un groupe divalent-(C=O)- et R₁, R₂, R₃ et R₄, identiques ou différents, représentent, indépendamment les uns des autres, soit un atome d'hydrogène, soit un radical de formule (B₁) choisi parmi les radicaux 3-(triéthoxysilyl) propyle, 3-[[3-(triéthoxysilyl) propyl] oxy] 2-hydroxy propyle, [4-[[[3-(triéthoxysilyl) propyl] amino] méthyl] phényl] méthyle, 4-[(triéthoxysilyl) phényl] propyle, 3-oxo 3-[[3-(triéthoxysilyl) propyl] oxy] propyle, 2-oxo 2-[[3-(triéthoxysilyl) propyl] amino] éthyle, [[3-(triéthoxysilyl) propyl] amino] carbonyle ou 4-[(triéthoxysilyl) phényl] méthyle, étant entendu que le composé de formule (I) comporte plus de six atomes d'azote cycliques et qu'au moins un des radicaux R₁ R₂ R₃ ou R₄ représente un radical B₁.

2. Composé de formule (I) telle que définie à la revendication 1, dans laquelle, lorsque T₁, T₂, T₃, T₄, T₅, T₆, T₇ et T₈, représentent un atome d'hydrogène ou un radical alkyle, T₁ est identique à T₂, T₃ est identique à T₄, T₅ est identique à T₆ et T₇ est identique à T₈.

3. Composé de formule (I) telle que définie à la revendication 1 ou 2, dans laquelle lorsque T₁, T₂, T₃, T₄, T₅, T₆, T₇ et T₈, représentent un radical alkyle, il s'agit du radical méthyle.

4. Composé de formule (I) telle que définie à l'une des revendications 1 à 3, dérivé du 6,6,13,13,20,20,27,27-octaméthyl 1,4,8,11,15,18,22,25-octaazacyclooctacosane, du 6,6,13,13,20,20,27,27-octa-méthyl 1,4,8,11,15,18,22,25-octaazacyclooctacosane-2,3,16,17-tétraone, du 1,4,7,10,13,16,19,22,25,28,31,34,37,40,43,46 hexadécaazacyclooctatétracontane-2,3,14,15,26,27,38,39-octaone ou du 1,4,8,11,15,18,22,25,29,32,36,39,43,46,50,53-hexadécaaza cyclohexapentacontane-2,3,16,17,30,31,44,45-octaone.

5. Composé de formule dont les noms suivent :
le 6,6,13,13,20,20,27,27-octaméthyl 1,4,8,11,15,18,22,25-octakis[[[3-(triéthoxysilyl)propyl]amino]carbonyl] 1,4,8,11,15,18,22,25-octaazacyclooctacosane,
le 6,6,13,13,20,20,27,27-octaméthyl 8,11,22,25-tétrakis[[[3-(triéthoxysilyl)propyl]amino]carbonyl]1,4,8,11,15,18,22,25-octaazacyclooctacosane-2,3,16,17-tétraone,
le 7,10,19,22,31,34,43,46-octakis[[[3-(triéthoxysilyl)propyl]amino]carbonyl] 1,4, 7,10,13,16,19,22,25,28,31,34,37,40,43,46-hexadécaazacyclooctatétracontane-2,3,14,15,26,27,38,39-octaone,
le 8,11,22,25,36,39,50,53-octakis[[[3-(triéthoxysilyl)propyl]amino]carbonyl] 1,4, 8,11,15,18,22,25,29,32,36,39,43,46,50,53-hexadécaazacyclohexapentacontane -2,3,16,17,30,31,44,45-octaone ou
le 6,6,13,13,20,20,27,27-octaméthyl 8,11,22,25-tétrakis[4-[(triéthoxysilyl)phényl] méthyl] 1,4,8,11,15,18,22,25-octaazacyclooctacosane-2,3,16,17-tétraone.

6. Procédé de préparation du composé de formule (I) telle que définie à l'une quelconque des revendications 1 à 5, **caractérisé en ce que** :
a) l'on fait réagir un composé choisi parmi le (triéthoxy) (3-iodopropyl) silane, le 2-[[[3-(triéthoxysilyl) propyl] oxy] méthyl]oxiranne, le N-[[4-(bromométhyl) phényl] méthyl] N-[3-(triéthoxysilyl) propyl] amine, le (triéthoxy) [(4-iodométhyl) phényl] silane, le propènoate de 3-(triéthoxysilyl) propyle, le N-[3-(triéthoxysilyl) propyl] bromoacétamide ou le (triéthoxy) (3-isocyanatopropyl) silane
avec un composé de formule (I'): 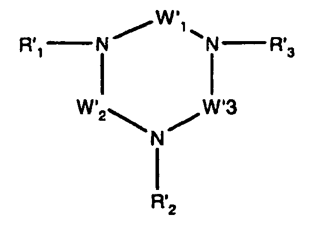 dans laquelle W'₁, W'₂ et W'₃, identiques ou différents, représentent indépendamment les uns des autres, chacun un radical divalent choisi parmi ceux représentés par la formule générale (A') :
-[(CT₅T₆)ₐ-(CT₁T₂)ₙ-[N(R'₄)]ₚ-(CT₃T₄)ₘ-(CT₇T₈)_{b}]ₗ- (A')
dans laquelle, a, b, l, p, n, m, T₁, T₂, T₃ T₄ T₅, T₆, T₇ et T₈ ont la même définition que pour la formule (A) telle que définie précédemment, R'₁, R'₂, R'₃ et R'₄ représentent un atome d'hydrogène, pour former le composé de formule (I).

7. Gel de polysiloxane (III) d'un composé de formule (I) telle que définie à l'une des revendications 1 à 5 incorporant des polyazamacrocycles et des complexes métalliques de ces ligands azotés, **caractérisé en ce qu'**il est susceptible d'être obtenu à partir de l'hydrolyse dudit composé de formule (I) pour former un gel de polysiloxane incorporant des motifs de polyazamacrocycles non métallés (III'), suivie de l'action d'un sel métallique sur ledit gel (III'). et plus particulièrement le gel de polysiloxane (III₁) dans lequel l'élément métallique est choisi parmi le cobalt ou le cuivre.

8. Gel de polysiloxane (IV) d'un composé de formule (I) telle que définie à l'une des revendications 1 à 5 incorporant des polyazamacrocycles et des complexes métalliques de ces ligands azotés, **caractérisé en ce qu'**il est susceptible d'être obtenu à partir de l'action d'un sel métallique sur ledit composé de formule (I) conduisant à la formation d'un complexe organométallique dudit métal avec ledit composé de formule (I), suivie de l'hydrolyse dudit complexe organométallique et plus particulièrement le gel de polysiloxane (IV₁) dans lequel l'élément métallique est choisi parmi le cobalt ou le cuivre.

9. Procédé de préparation du gel de polysiloxane (III) tel que défini à la revendication 7 **caractérisé en ce qu'**un composé de formule (I) est soumis à un hydrolyse conduisant au gel non métallé (III'), puis **en ce que** ledit gel (III') est mis à réagir avec un sel métallique.

10. Procédé de préparation du gel de polysiloxane (IV) tel que défini à la revendication 8 **caractérisé en ce qu'**un composé de formule (I) est mis à réagir avec un sel métallique conduisant à la formation d'un complexe organométallique dudit métal avec ledit composé de formule (I), puis **en ce que** ledit complexe organométallique est soumis à une hydrolyse.

11. Utilisation de ces gels hybrides métallés tels que définis à l'une des revendications 7 ou 8, pour séparer un gaz déterminé d'un mélange de gaz, **caractérisée par** la mise en contact dudit mélange de gaz avec un des gels hybrides métallés (III) ou (IV), tels que définis précédemment, dans des conditions permettant l'absorption dudit gaz à séparer, suivie d'une phase de désorption dudit gaz fixé sur ledit gel et d'une phase de récupération dudit gaz désorbé.

12. Utilisation telle que définie à la revendication 11 appliquée à la séparation de l'oxygène de l'air, soit dans le but de produire de l'oxygène pur, soit dans le but d'éliminer l'oxygène de l'air.

13. Gel non métallé (III') tel que défini à la revendication 7.

14. Utilisation du gel (III') tel que défini à la revendication 7, pour purifier les gaz par adsorption des impuretés gazeuses indésirables.

## Patentansprüche

1. Verbindung der Formel (I) : 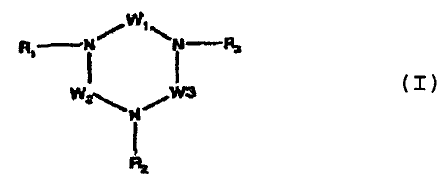 wobei W₁, W₂ und W₃, identisch oder verschieden, unabhängig voneinander jeweils für einen zweiwertigen Rest, ausgewählt aus denen, die durch die allgemeine Formel (A) :
-[(CT₅T₆)ₐ-CT₁T₂)ₙ- [N(R₄)]ₚ-(CT₃T₄)ₘ-CT₇T₈)_{b}]_{I}- (A)
wiedergegeben sind, stehen,
wobei p für eine ganze Zahl zwischen 0 und 1 steht, I für eine ganze Zahl größer als oder gleich 10 und insbesondere kleiner als oder gleich 5 steht, n und m, identisch oder verschieden, jeweils unabhängig voneinander für eine ganze Zahl kleiner als oder gleich 3 und größer als oder gleich 1 stehen, a und b, identisch oder verschieden, jeweils unabhängig voneinander für eine ganze Zahl kleiner als oder gleich 2 und größer als oder gleich 0 stehen, T₁, T₂, T₃, T₄, T₅, T₆, T₇ und T₈, identisch oder verschieden, entweder jeweils unabhängig voneinander für ein Wasserstoffatom oder einen linearen oder verzweigten Alkylrest mit 1 bis 15 Kohlenstoffatomen stehen, oder CT₁T₂ und/oder CT₃T₄ und/oder CT₅T₆ und/oder CT₇T₈ für eine zweiwertige Gruzpe -(C=O)- steht, und R₁, R₂, R₃ und R₄, identisch oder verschieden, jeweils unabhängig voneinander entweder für ein Wasserstoffatom oder einen Rest der Formel (B₁), ausgewählt aus den Resten (3- (Triethoxysilyl)propyl, 3-[[3-(Triethoxysilyl) propyl]oxy]-2-hydroxypropyl, [4-[[[3-(Triethoxysilyl)propyl]amino]methyl]phenyl]methyl, 4-[(Triethoxysilyl)phenyl]propyl, 3-Oxo-3-[[3-(Triethoxysilyl)propyl]oxy]propyl, 2-Oxo-2-[[3-(Triethoxysilyl)propyl]amino]ehtyl, [[3-(Triethoxysilyl)propyl]amino]carbonyl oder 4-[(Triethoxysilyl)phenyl]methyl, stehen, wobei klar ist, dass die Verbindung der Formel (I) mehr als sechs cyclische Stickstoffatome enthält und dass mindestens einer der Reste R₁, R₂, R₃ oder R₄ für einen Rest B₁ steht.

2. Verbindung der Formel (I) wie in Anspruch 1 definiert, in der, wenn T₁, T₂, T₃, T₄, T₅, T₆, T₇ und T₈ für ein Wasserstoffatom oder einen Alkylrest stehen, T₁ identisch ist mit T₂, T₃ identisch ist mit T₄, T₅ identisch ist mit T₆ und T₇ identisch ist mit T₈.

3. Verbindung der Formel (I) wie in Anspruch 1 oder 2 definiert, wobei, wenn T₁, T₂, T₃, T₄, T₅, T₆, T₇ und T₈ für einen Alkylrest stehen, es sich um einen Methylrest handelt.

4. Verbindung der Formel (I) wie in einem der Ansprüche 1 bis 3 definiert, abgeleitet von 6,6,13,13,20,20,27,27-octamethyl-1,4,8,11,15,18,22,25-octaazacyclooctacosan, von 6, 6,13,13,20,20,27,27-Octamethyl-1,4,8,11,15,18,22,25-octaazacyclooctacosan-2,3,16,17-tetraon, von 1,4,7,10,13,16,19,22,25,28, 31,34,37,40,43,46-Hexadecaazacyclooctatetracontan-2,3,14,15,26,27,38,39-octaon oder von 1,4,8,11,15,18,22,25,29,32,36,39,43,46,50,53-Hexadecaazacyclohexapentacontan-2,3,16,17,30,31,44,45-octaon.

5. Verbindung der Formel, deren Bezeichnungen folgen:
6,6,13,13,20,20,27,27-Octamethyl 1,4,8,11,15,18,22,25-octakis [[[3-(triethoxysilyl)propyl]amino]carbonyl]1,4,8,11,15,18,22,25-octaazacyclooctacosan,
6,6,13,13,20,20,27,27-Octamethyl-8,11,22,25-tetrakis[[[3-(triethoxysilyl)propyl]amino]-carbonyl] 1,4,8,11,15,18,22,25-octaazacyclooctacosan-2,3,16,17-tetraon,
7,10,19,22,31,34, 43,46-Octakis[[[3-(triethoxysilyl)propyl]amino]carbonyl] 1,4,7,10,13,16,19,22, 25,28,31,34,37,40,43,46-hexadecaazacyclooctatetracontan-2,3,14,5,26,27,38,39-octaon, 8,11,22,25,36,39,50,53-Octakis[[[3-(triethoxysilyl)propyl]amino]carbonyl]
1,4,8,11,15,18,22,25,29,32,36,39,43,46,50,53-Hexadecaazacyclohexapentacontan-2,3,16,27,30,31,44,45-octaon oder
6,6,13,13,20,20,27,27-Octamethyl-8,11,22,25-tetrakis[4-[(triethoxysilyl)phenyl]methyl] 1,4,8, 11,15,18,22,25-octaazacyclooctacosan-2,3,16,17-tetraon.

6. Verfahren zur Herstellung der Verbindung der Formel (I) wie in einem der Ansprüche 1 bis 5 definiert, **dadurch gekennzeichnet, dass** man:
a) eine Verbindung, ausgewählt aus (Triethoxy) (3-iodopropyl)silan, 2-[[[3-(Triethoxysilyl)propyl]oxyl]methyl]oxiran, N-[[4-(bromomethyl)phenyl]methyl]-N-[3-(triethoxysilyl)propyl]amin, (Triethoxy)[(4-iodomethyl)phenyl]silan, Propenoat von 3-(Triethoxysilyl)propyl, N-[3-(triethoxysilyl)propyl]bromacetamid oder (Triethoxy)(3-isocyanatpropyl) silan
umsetzt mit einer Verbindung der Formel (I'): 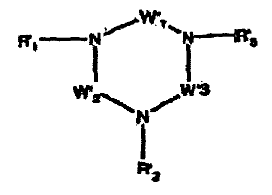 wobei W'1, W'2 und W'3, identisch oder verschieden, unabhängig voneinander für jeweils einen zweiwertigen Rest stehen, ausgewählt aus jenen, die wiedergegeben sind durch die allgemeine Formel (A') :
-[(CT₅T₆)ₐ-CT₁T₂)ₙ-[N(R'₄)]ₚ-(CT₃T₄)ₘ-CT₇T₈)_{b}]_{I}- (A')
wobei a, b, I, p, n, m, T₁, T₂, T₃, T₄, T₅, T₆, T₇ und T₈ dieselbe Definition haben wie für die zuvor definierte Formel (A), R'₁, R'₂, R'₃ und R'₄ für ein Wasserstoffatom stehen, um die Verbindung der Formel (I) zu bilden.

7. Polysiloxangel (III) einer Verbindung der Formel (I) wie in einem der Ansprüche 1 bis 5 definiert, umfassend Polyazamacrocyclen und Metallkomplexe dieser Stickstoff liganden, **dadurch gekennzeichnet, dass** es durch Hydrolyse dieser Verbindung der Formel (I) erhalten werden kann, um ein Polysiloxangel zu bilden, das Einheiten nicht metallierter Polyazamacrocyclen (III') enthält, gefolgt von der Wirkung eines Metallsalzes auf das Gel (III') und insbesondere das Polysiloxangel (III₁), wobei das Metallelement aus Kobalt oder Kupfer ausgewählt ist.

8. Polysiloxangel (IV) einer Verbindung der Formel (I) wie in einem der Ansprüche 1 bis 5 definiert, umfassend Polyazamacrocyclen und Metallkomplexe dieser Stickstoff liganden, **dadurch gekennzeichnet, dass** es durch die Wirkung eines Metallsalzes auf die Verbindung der Formel (I) erhalten werden kann, was zur Bildung eines organometallischen Komplexes mit der Verbindung der Formel (I) führt, gefolgt durch Hydrolyse des organometallischen Komplexes und insbesondere des Polysiloxangels (IV₁), wobei das Metallelement aus Kobalt oder Kupfer ausgewählt ist.

9. Verfahren zur Herstellung des Polysiloxangels (III) wie in Anspruch 7 definiert, **dadurch gekennzeichnet, dass** man eine Verbindung der Formel (I) einer Hydrolyse unterzieht, bei der das nicht metallierte Gel (III') entsteht, und man anschließend dieses Gel (III') mit einem Metallsalz umsetzt.

10. Verfahren zur Herstellung von Polysiloxangel (IV) wie in Anspruch 8 definiert, **dadurch gekennzeichnet, dass** man eine Verbindung der Formel (I) mit einem Metallsalz umsetzt, wobei ein organometallischer Komplex des Metalls mit der Verbindung der Formel (I) entsteht, und man anschließend den organometallischen Komplex einer Hydrolyse unterzieht.

11. Verwendung dieser metallierten Hybridgels wie in einem der Ansprüche 7 oder 8 definiert zum Trennen eines bestimmten Gases aus einem Gasgemisch, **dadurch gekennzeichnet, dass** man, das Gasgemisch mit einem der zuvor definierten metallierten Hybridgels (III) oder IV) unter Bedingungen in Kontakt bringt, die die Absorption des zu trennenden Gases ermöglichen, gefolgt von einer Desorptionsphase des auf dem Gel fixierten Gases und einer Rückgewinnungsphase des desorbierten Gases.

12. Verwendung wie in Anspruch 11 definiert, angewendet auf die Trennung von Sauerstoff aus Luft, entweder mit dem Ziel, reinen Sauerstoff zu produzieren, oder mit dem Ziel, den Sauerstoff aus der Luft zu eliminieren.

13. Nicht metalliertes Gel (III') wie in Anspruch 7 definiert.

14. Verwendung des Gels (III') wie in Anspruch 7 definiert zum Reinigen der Gase durch Adsorption unerwünschter gasförmiger Unreinheiten.

## Claims

1. Compound of formula (I): 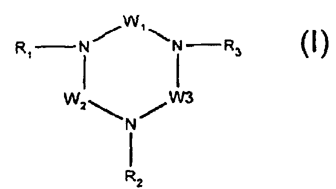 in which W₁, W₂ and W₃, which are identical or different, each represent, independently of one another, a divalent radical chosen from those represented by the general formula (A):
-[(CT₅T₆)ₐ-(CT₁T₂)ₙ-[N(R₄)]ₚ-(CT₃T₄)ₘ-(CT₇T₈)_{b}]ₗ- (A)
in which p represents an integer equal to 0 or to 1, l represents an integer greater than or equal to 1 and less than or equal to 10 and more particularly less than or equal to 5, n and m, which are identical or different, each represent, independently of one another, an integer less than or equal to 3 and greater than or equal to 1, a and b, which are identical or different, each represent, independently of one another, an integer of less than or equal to 2 and greater than or equal to 0, T₁, T₂, T₃, T₄, T₅, T₆, T₇ and T₈, which are identical or different, either each represent, independently of one another, a hydrogen atom or a linear or branched alkyl radical comprising from 1 to 15 carbon atoms or CT₁T₂ and/or CT₃T₄ and/or CT₅T₆ and/or CT₇T₈ represent a divalent group -(C=O)- and R₁, R₂, R₃ and R₄, which are identical or different, represent, independently of one another, either a hydrogen atom or a radical of formula (B₁) chosen from the 3-(triethoxysilyl)propyl, 3-[[3-(triethoxysilyl)propyl]oxy]-2-hydroxypropyl, [4-[[[3-(triethoxysilyl)propyl]amino]methyl]phenyl]methyl, [4-(triethoxysilyl)phenyl]propyl, 3-oxo-3-[[3-(triethoxysilyl)propyl]oxy]propyl, 2-oxo-2-[[3-(triethoxysilyl)propyl]amino]ethyl, [[3-(triethoxysilyl)propyl]amino]carbonyl or [4-(triethoxysilyl)phenyl]methyl radicals, it being understood that the compound of formula (I) comprises more than six cyclic nitrogen atoms and that at least one of the radicals R₁, R₂, R₃ or R₄ represents a B₁ radical.

2. Compound of formula (I) as defined in Claim 1, in which, when T₁, T₂, T₃, T₄, T₅, T₆, T₇ and T₈ represent a hydrogen atom or an alkyl radical, T₁ is identical to T₂, T₃ is identical to T₄, T₅ is identical to T₆ and T₇ is identical to T₈.

3. Compound of formula (I) as defined in Claim 1 or 2, in which, when T₁, T₂, T₃, T₄, T₅, T₆, T₇ and T₈ represent an alkyl radical, it is the methyl radical.

4. Compound of formula (I) as defined in one of Claims 1 to 3 which is derived from 6,6,13,13,20,20,27,27-octamethyl-1,4,8,11,15,18,22,25-octaazacyclooctacosane, from 6,6,13,13,20,20,27,27-octamethyl-1,4,8,11,15,18,22,25-octaazacyclooctacosane-2,3,16,17-tetraone, from 1,4,7,10,13,16,19,22,25,28,31,34,37,40,43,46-hexadecaazacyclooctatetracontane-2,3,14,15,26,27,38,39-octaone or from 1,4,8,11,15,18,22,25,29,32,36,39,43,46,50,53-hexadecaazacyclohexapentacontane-2,3,16,17,30,31,44,45-octaone.

5. Compound of formula (I) with the following names:
6,6,13,13,20,20,27,27-octamethyl-1,4,8,11,15,18,22,25-octakis[[[3-(triethoxysilyl)propyl]amino]carbonyl]-1,4,8,11,15,18,22,25-octaazacyclooctacosane,
6,6,13,13,20,20,27,27-octamethyl-8,11,22,25-tetrakis[[[3-(triethoxysilyl)propyl]amino]carbonyl]-1,4,8,11,15,18,22,25-octaazacyclooctacosane-2,3,16,17-tetraone,
7,10,19,22,31,34,43,46-octakis[[[3-(triethoxysilyl)propyl]amino]carbonyl]-1,4,7,10,13,16,19,22,25, 28,31,34,37,40,43,46-hexadecaazacyclooctatetracontane-2,3,14,15,26,27,38,39-octaone,
8,11,22,25,36,39,50,53-octakis[[[3-(triethoxysilyl)propyl]amino]carbonyl]-1,4,8,11,15,18,22,25,29,32,36,39,43,46,50,53-hexadecaazacyclohexapentacontane-2,3,16,17,30,31,44,45-octaone or
6,6,13,13,20,20,27,27-octamethyl-8,11,22,25-tetrakis[[4-(triethoxysilyl)phenyl]methyl]-1,4,8,11,15,18,22,25-octaazacyclooctacosane-2,3,16,17-tetraone.

6. Process for the preparation of the compound of formula (I) as defined in any one of Claims 1 to 5, **characterized in that**:
a compound chosen from (triethoxy)(3-iodopropyl)silane, 2-[[[3-(triethoxysilyl)propyl]oxy]methyl]oxirane, N-[[4-(bromomethyl)phenyl]methyl]-N-[3-(triethoxysilyl)propyl]amine, (triethoxy)[4-(iodomethyl)phenyl]silane, 3-(triethoxysilyl)propyl propenoate, N-[3-(triethoxysilyl)propyl]bromoacetamide or (triethoxy)(3-isocyanatopropyl)silane
is reacted with a compound of formula (I'): 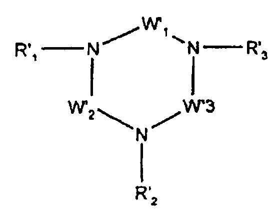 in which W'₁, W'₂ and W'₃, which are identical or different, each represent, independently of one another, a divalent radical chosen from those represented by the general formula (A'):
-[(CT₅T₆)ₐ - ( CT₁T₂)ₙ- [N(R'₄)]ₚ-(CT₃T₄)ₘ-(CT₇T₄)_{b}]ₗ- (A')
in which a, b, l, p, n, m, T₁, T₂, T₃, T₄, T₅, T₆, T₇ and T₈ have the same definitions as for the formula (A) as defined above and R'₁, R'₂, R'₃ and R'₄ represent a hydrogen atom, to form the compound of formula (I).

7. Polysiloxane gel (III) of a compound of formula (I) as defined in one of Claims 1 to 5 incorporating polyazamacrocycles and metal complexes of these nitrogenous ligands, **characterized in that** it is capable of being obtained from the hydrolysis of the said compound of formula (I) to form a polysiloxane gel incorporating non-metallated polyazamacrocycle units (III'), followed by the action of a metal salt on the said gel (III'), and more particularly the polysiloxane gel (III₁) in which the metal element is chosen from cobalt or copper.

8. Polysiloxane gel (IV) of a compound of formula (I) as defined in one of Claims 1 to 5 incorporating polyazamacrocycles and metal complexes of these nitrogenous ligands, **characterized in that** it is capable of being obtained from the action of a metal salt on the said compound of formula (I), resulting in the formation of an organometallic complex of the said metal with the said compound of formula (I), followed by the hydrolysis of the said organometallic complex, and more particularly the polysiloxane gel (IV₁) in which the metal element is chosen from cobalt or copper.

9. Process for the preparation of the polysiloxane gel (III) as defined in Claim 7, **characterized in that** a compound of formula (I) is subjected to hydrolysis, resulting in the non-metallated gel (III'), and then **in that** the said gel (III') is reacted with a metal salt.

10. Process for the preparation of the polysiloxane gel (IV) as defined in Claim 8, **characterized in that** a compound of formula (I) is reacted with a metal salt, resulting in the formation of an organometallic complex of the said metal with the said compound of formula (I), and then **in that** the said organometallic complex is subjected to hydrolysis.

11. Use of these metallated hybrid gels as defined in either of Claims 7 and 8 in separating a predetermined gas from a mixture of gases, **characterized by** bringing the said mixture of gases into contact with one of the metallated hybrid gels (III) or (IV) as defined above under conditions which make possible the absorption of the said gas to be separated, followed by a phase of desorption of the said gas attached to the said gel and by a phase of recovery of the said desorbed gas.

12. Use as defined in Claim 11 applied to the separation of oxygen from the air, either for the purpose of producing pure oxygen or for the purpose of removing oxygen from the air.

13. Non-metallated gel (III') as defined in Claim 7.

14. Use of the gel (III') as defined in Claim 7 in purifying gases by adsorption of the undesirable gaseous impurities.
